(19) **Europäisches Patentamt / European Patent Office / Office européen des brevets**

(11) **EP 2 187 595 A1**

(12) **EUROPEAN PATENT APPLICATION**

(43) Date of publication:
**19.05.2010 Bulletin 2010/20**

(51) Int Cl.:
**H04L 29/08** (2006.01)

(21) Application number: **08169334.3**

(22) Date of filing: **18.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Koninklijke Philips Electronics N.V.**
**5621 BA Eindhoven (NL)**

(72) Inventor: **The designation of the inventor has not yet been filed**

(74) Representative: **Damen, Daniel Martijn**
**Philips**
**Intellectual Property & Standards**
**P.O. Box 220**
**5600 AE Eindhoven (NL)**

(54) **A method and a module for labeling a set of data samples**

(57) A method for labeling a set of data samples is provided. The method comprises the steps of determining meta data ($S_{meta}$), accessing a host signal ($S_{host}$) comprising a set of sensor data samples, and modifying said host signal ($S_{host}$) by embedding said meta data ($S_{meta}$) into said host signal ($S_{host}$). Also, a module for labeling a set of data samples is provided. The module comprises a determinator (410) configured to determine meta data, an accessing unit (420) configured to access a host signal comprising a set of sensor data samples, and a modifier (430) configured to modify said host signal by embedding said meta data into said host signal.

Fig. 2

EP 2 187 595 A1

**Description**

FIELD OF THE INVENTION

This invention relates to a method for labeling a set of data with meta data. More particularly, the invention relates to a module for labeling said set of data with meta data.

BACKGROUND OF THE INVENTION

Different types of sensors are widely used in a vast amount of applications. Such sensors may be configured to measure physical magnitudes of a system, and to generate a signal corresponding to the measured value. A specific type of sensor is the accelerometer.

Accelerometers are rapidly becoming adopted into electronic consumer products. In particular, they are used to monitor a user's pattern of physical activities. Applications may e.g. be related to the realm of lifestyle or to the health and wellbeing of the user. Accelerometers may either be applied in dedicated devices, or integrated into general-purpose products such as mobile phones.

One-dimensional accelerometers are e.g. used in step counters (pedometers) for runners. They are typically mounted at the ankle or on the shoe of the user, and such pedometers detect the accelerations of the foot during running. From the collected data, displacement and speed may be estimated.

Three-dimensional accelerometers are e.g. used to monitor the activity level of users. Typically, such devices are used to monitor the amount of energy expended on physical activities per day, and ultimately to aid in improving the user's fitness. Also, pattern recognition may be used to recognize specific activities like e.g. cycling or running in order to segment and label the acceleration data accordingly.

Further applications of accelerometers may be related to the health and wellbeing of the user, such as to monitor how well elderly people are able to walk. Thus, the risk of falling may be calculated, which is an important cause of illness among elderly people. Moreover, further applications are related to security, such as to monitor a prisoner's activities.

In the aforementioned applications, data is typically collected by the device and stored into a non-volatile memory, and regularly transferred to another device (e.g. PC or server) for archiving, further analysis, or displaying of energy expenditure over time etc.

In further applications, users may want to share the activity data e.g. via online communities to serve as a token of the user's lifestyle pattern.

When transferring, storing or sharing accelerometer data, additional meta data, such as identity (ID) of the user, time and date of recording, wearing position etc., is required. In many cases, only portions of the accelerometer data are required. Thus, the accelerometer data must be accessed, and the portions of interest must be extracted. When several portions are of interest, meta data for each segment must be derived from the original meta data. The portions can then e.g. be transferred over Internet, for remote access by a computer.

Hence, a problem with such deriving and transferring of accelerometer data portions is the risk of loss of data during data transfer. If some parts of the portions are lost, the received data portions will be incomplete and there will be an imminent risk that the link to the meta data is missing, rendering an erroneous interpretation of the original accelerometer data.

Another problem is that the meta data is accessible to anyone, even if some portions of the accelerometer data should not be available and associated with meta data due to privacy or security reasons.

Hence, an improved method and module for labeling a set of data samples allowing for increased flexibility and security would be advantageous.

SUMMARY OF THE INVENTION

Accordingly, the present invention preferably seeks to mitigate, alleviate or eliminate one or more of the above-identified deficiencies in the art and disadvantages singly or in any combination and solves at least the above-mentioned problems by providing a method, module, device, and computer program product according to the appended patent claims.

An object according to some embodiments is to provide a method and a module for providing an improved administration of sensor data.

Another object according to some embodiments is to provide a method and a module for increasing the robustness of sensor data.

An idea according to some embodiments is to provide a way of embedding metadata into the sensor data by means of watermarking.

According to an aspect, a method for labeling a set of data samples is provided. The method comprises determining meta data, accessing a host signal comprising a set of sensor data samples, and modifying the host signal by embedding the meta data into the host signal. The method could be implemented for several different applications utilizing e.g. accelerometers, such as energy expenditure systems, activity recognition systems, pedometers, monitoring systems for elderly care, child trackers using accelerometry, and security systems.

In another aspect a module for labeling a set of data samples is provided. The module comprises a unit configured to determine meta data, an accessing unit configured to access a host signal comprising a set of sensor data samples, and a modifier configured to modify the host signal by embedding the meta data into the host signal.

According to yet another aspect, a computer program product is provided. The computer program product is configured to cause a processor to execute the method according to some embodiments.

In another aspect a device for collecting and labeling a set of data samples is provided. The device comprises sensing unit configured to generate a host signal corresponding to a physical quantity of the system. The signal comprises a set of data samples. The device further comprises a first memory storing at least meta data. The device further comprises the module according to some embodiments. Moreover, the device comprises a second memory storing the modified host signal. The device further comprises a second module configured to decode the modified host signal to the original host signal and the meta data.

BRIEF DESCRIPTION OF THE DRAWINGS

These and other aspects, features and advantages of which the invention is capable of will be apparent and elucidated from the following description of embodiments of the present invention, reference being made to the accompanying drawings, in which:

  Fig. 1 is a flow chart schematically showing a method according to an embodiment;
  Fig. 2 is a flow chart schematically showing a method according to an embodiment;
  Fig. 3 is a diagram of the frequency spectrum of normalized accelerometer data according to an embodiment;
  Fig. 4 is a flow chart schematically showing a method for decoding a set of labeled data samples according to an embodiment; and
  Fig. 5 is a block scheme of a device according to an embodiment.

DESCRIPTION OF EMBODIMENTS

Several embodiments of the present invention will be described in more detail below with reference to the accompanying drawings in order for those skilled in the art to be able to carry out the invention. The invention may, however, be embodied in many different forms and should not be construed as limited to the embodiments set forth herein. Rather, these embodiments are provided so that this disclosure will be thorough and complete, and will fully convey the scope of the invention to those skilled in the art. The embodiments do not limit the invention, but the invention is only limited by the appended patent claims. Furthermore, the terminology used in the detailed description of the particular embodiments illustrated in the accompanying drawings is not intended to be limiting of the invention.

The following description focuses on an embodiment of the present invention applicable to a method of labeling a set of data samples.

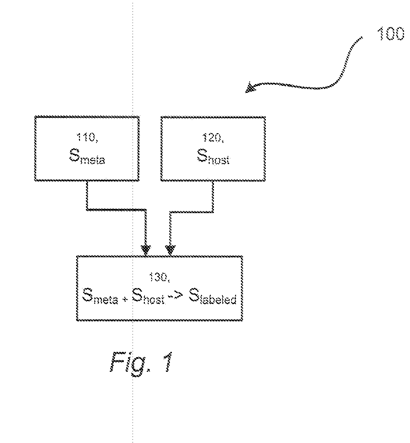

In an embodiment, according to Fig. 1, a method 100 for labeling a set of data samples is provided. The method 100 may be implemented with an accelerometer, continuously sampling an acceleration of an object to which the accelerometer is connected. In the labeling method 100, also referred to as a digital watermarking method, a step 110 of determining meta data is performed. The step 110 may e.g. include fetching the current date and time, retrieving the owner's ID, the serial number of the accelerometer used etc. The meta data is determined as a signal $S_{meta}$. In a next step 120, a signal $S_{host}$ comprising a set of accelerometer data is accessed from the accelerometer in use. The signal $S_{host}$ and $S_{meta}$ are then modified in a step 130, where a resulting labeled signal is constructed by embedding $S_{meta}$ into $S_{host}$.

The step of modifying the host signal $S_{host}$ may comprise dividing the host signal $S_{host}$ to a high frequency portion $S_{host, HF}$ and a low frequency portion $S_{host, LF}$, embedding the meta data $S_{meta}$ into the low frequency portion $S_{host, LF}$, and adding the resulting embedded low frequency portion $S_{embed}$ to the high frequency portion $S_{host, HF}$. In applications wherein high frequency components are of particular interest, such as step counting applications using e.g. accelerometers, and energy expenditure computation of pattern recognition for recognizing specific activities like e.g. cycling or running in order to segment and label the acceleration data accordingly, this is advantageous in that the high frequency component of the host signal is left as original while the low frequency portion of the host signal, which is of no particular interest, serves to accommodate the meta data.. Hence, increased robustness, flexibility and/or security may be achieved.

The steps of determining meta data 110, accessing a host signal 120 and modifying the host signal 130 may be executed once for a set of $S_{host}$ samples out of a contiguous larger set of acceleration samples.

Alternately, the steps of determining meta data 110, accessing a host signal 120 and modifying the host signal 130 may be repeated for a plurality of set of accelerometer samples. This is advantageous in that the signal to noise ratio (SNR) of the embedded meta data may be increased when the host signal is to be decoded. To reach the same SNR, the repetitive approach allows meta data of a very low magnitude, thus leading to an increased security level.

To this end, the method 100 is repeated for every new $S_{host}$, i.e. for every new set of accelerometer data samples. $S_{host}$ may contain any possible number of samples, which may be predetermined as a pre-programmed parameter of the accelerometer in use, or by specific user preferences. A criterium in determining the length of $S_{host}$ may be that the number of samples in $S_{host}$ is sufficiently large so that the overlap in spectrum of the modified low frequency component, comprising $S_{meta}$ and $S_{host, LF}$, with $S_{host, HF}$ is minimized.

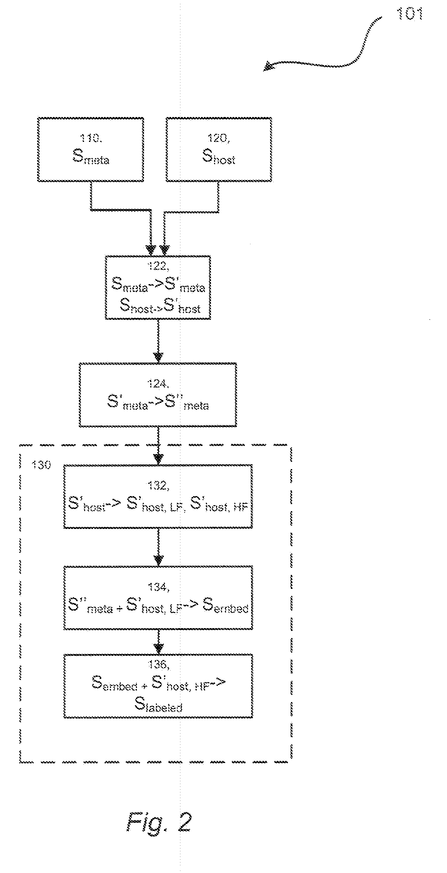

In another embodiment, a method 101 is provided to labeling the set of data samples according to another scheme. As shown in Fig. 2, the method 101 begins with a step 110 of determining meta data. As described above, the step 110 may e.g. include fetching the current date and time, retrieving the owner's ID, the serial number of the accelerometer used etc. The meta data is determined as a signal $S_{meta}$. In the next step 120, a signal $S_{host}$ comprising a set of accelerometer data is accessed from the accelerometer in use. The signal $S_{host}$ and $S_{meta}$ are then modified in a step 122, which step applies an encrypting algorithm to $S_{host}$, to $S_{meta}$, or to both $S_{host}$ and $S_{meta}$. Thus, the encryption step 122 provides a modified meta data signal $S'_{meta}$ and a modified host signal $S'_{host}$. Hence, the security level of the method is further increased. In an embodiment where the encrypting algorithm is applied to only $S_{host}$, the $S'_{meta}$ may be identical to $S_{meta}$. In an embodiment where the encrypting algorithm is applied to only $S_{meta}$, the $S'_{host}$ may be identical to $S_{host}$. In an alternative embodiment the modification of $S_{host}$ and $S_{meta}$ are performed in separate steps.

The method may further comprise applying 124 a channel coding scheme to the meta data signal $S_{meta}$. Hence, meta data may be retrieved in a robust way when $S_{host}$ contains, especially, low frequency noise.

In such step 124, $S'_{meta}$ is modulated by a channel code scheme, resulting in a modulated signal $S''_{meta}$. For example, if the meta data $S'_{meta}$ contains a DC component, then the (near-)DC component in $S'_{host}$ caused by the earth gravity force might interfere with it, leading to a decreased robustness for the meta data retrieval. In such case, the channel coding might remove the DC component from $S'_{meta}$ e.g. by employing an eight-to-ten coding followed by a mapping from unipolar alphabet {0, 1} to bipolar alphabet {-1, 1}, as known in the art of channel coding. As another example, redundancy can be added to the metadata $S'_{meta}$ e.g. by employing a Golay coding. The resulting data can be made less susceptible to bursty errors by applying a block interleaving.

The step 130 of modifying the signal $S'_{host}$ is divided into several steps 132, 134 and 136. In step 132, $S'_{host}$ is segmented into a low-frequency portion $S'_{host, LF}$ and a high-frequency portion $S'_{host, HF}$. $S'_{host, LF}$ and $S''_{meta}$ are embedded to a resulting signal $S_{embed}$ in step 134. Further, in step 136, the signal $S_{embed}$ is added to $S'_{host, HF}$ to form a final digitally watermarked signal $S_{labeled}$.

The step of determining meta data 110 may further comprise determining meta data having a frequency spectrum distributed below a predetermined frequency value, e.g. below 1 Hz. Hence, the high frequency portion of the host signal is not affected by the modifying step.

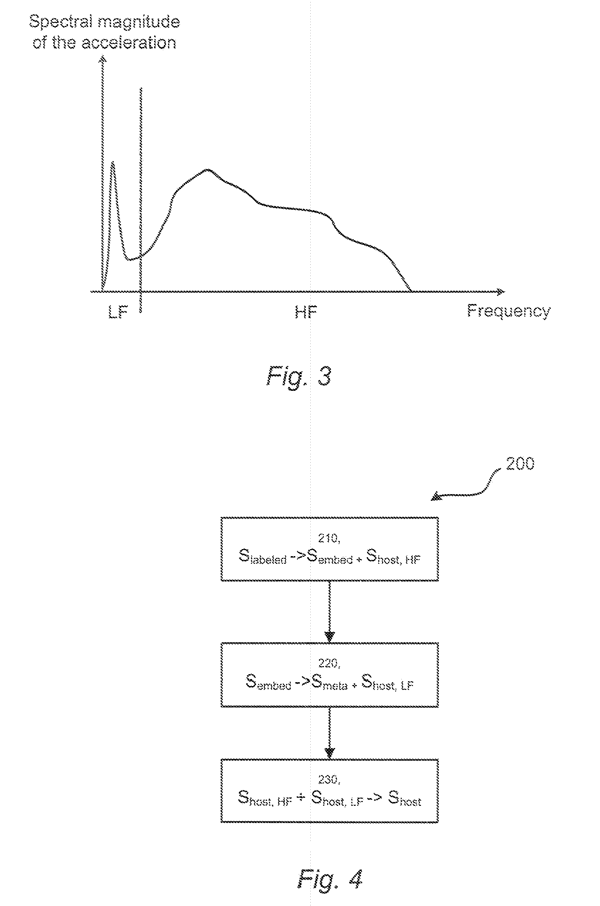

In Fig. 3, a frequency spectrum of $S_{host}$ is shown. Here, the spectral magnitude of the acceleration corresponds to the norm of the potentially multi-dimensional (e.g. three-dimensional) acceleration vector. A dashed line divides the spectrum into a low-frequency portion LF and a high-frequency portion HF. The LF portion mainly contains information regarding the earth acceleration component or 'G vector' (or more precisely, the opposite of it, being the reaction to the earth's gravity force). In some cases, an extra low-frequency component may be also present on top of the G vector in some user's activities, e.g. when the accelerometer moves very slowly. However, such component is usually small compared to the earth acceleration component. Correspondingly, the HF portion of the frequency spectrum mainly contains information related to movements of the user.

In an embodiment, for pattern recognition application, the G vector or LF portion may be used to determine the orientation of the activity accelerations relative to the earth (i.e. to discern between down/upward and horizontal movements). However, other computed features mostly do not depend or are skipped on near-DC values, i.e. when the frequency is close to zero. In energy expenditure applications, the G vector component may be removed by filtering since the oriented acceleration does not have any contribution.

Since the magnitude of the G vector is constant and known (it corresponds to an acceleration of approximately 9.8 m/s$^2$), it may be used as a carrier to modulate information upon.

In an embodiment where the spectrum is first split into an LF portion and a HF portion, complementary low pass and high pass filters may be used. Subsequently, only the LF portion is modulated with signal $S_{meta}$, which is derived from the meta data. After modulating, the LF portion is added back to the HF portion again.

In this way, the modulation only affects the G vector part of the acceleration data signal $S_{host}$ when the spectrum of the modulation signal $S_{meta}$ is properly designed to be low-frequent.

The step of modifying the host signal $S_{host}$ may comprise amplitude modulation of the host signal $S_{host}$. This

is advantageous in that common algorithms are used, thus facilitating the modifying step.

In a simplified embodiment, amplitude modulation is used to embed the meta data signal $S_{meta}$ directly upon the acceleration data signal $S_{host}$.

The result of amplitude modulation is a spreading of the sidebands of the original frequency spectrum. In order to keep the sidebands small and thus the resulting frequency spectrum close to the original acceleration data frequency components, the spectrum of the metadata should be low frequent. Such simplified embodiment, without segmenting the signal $S_{host}$ into a LF portion and a HF portion, would benefit from a lower complexity. However, in such embodiment not only the G vector component but also the HF portion of the spectrum, containing the acceleration data of interest, is modulated. The seriousness of this depends on the application: for energy expenditure estimation, the modulation effect may well 'smooth out' over time, but for pattern recognition purposes, the spectral distortion might decrease recognition performance.

The meta data may comprise at least one of the following: owner ID, accelerometer ID, date, time or location, ID of the sensor device used, external signaling by the user of the present activity, sensor wearing position, sensor wearing orientation relative to the earth, or geographic location of the activity sensor device. This is advantageous in that the accelerometer data may be segmented and sorted in several ways, thus improving the accelerometer data administration.

In Fig. 4, a flow chart of a demodulation method 200 according to an embodiment is shown. The demodulation method 200 may be utilized to demodulate a labeled signal $S_{labeled}$, being processed by some embodiments.

The method comprises filtering 210 a modified signal, e.g. by utilizing a low pass filter, resulting in segmenting the modified signal $S_{labeled}$ into a higher frequency (HF) portion $S_{host, HF}$ and an embedded lower frequency signal $S_{embed}$. The method further comprises decoding 220 the embedded signal $S_{embed}$, resulting in segmenting the embedded signal $S_{embed}$ into the meta data signal $S_{meta}$ and the LF portion $S_{host, LF}$ of the host signal $S_{host}$. From this step 220, the meta data is extracted and may be read for administration purposes or similar.

In an embodiment, the method further comprises adding 230 the LF portion $S_{host, LF}$ and the HF portion, $S_{host, HF}$ to form the original acceleration data signal $S_{host}$. However, in applications where the LF portion of the host signal may be neglected, this step 230 may be skipped.

In the following, a mathematical model of the modifying step and the corresponding decoding step is presented. The meta data is represented by a digital sequence $D$ of bits, i.e. zeros and ones. The signal $S_{meta}$ is determined by a function $S_{meta} = f(D) = 1 - c + 2c \cdot D$, where $c << 1$. In both embodiments described above, i.e. when the host signal $S_{host}$ is segmented into a HF portion and a LF portion before the step of modifying the $S_{host}$, or when the host signal is modified without a previous segmenting step, the LF portion of the host signal $S_{host}$ will be $S_{embed} = G \cdot (1 - c + 2c \cdot D)$, where $G$ is the earth acceleration vector. $S_{embed}$ is then added to the HF portion $S_{host, HF}$ of the host signal to form the digitally watermarked signal $S_{labeled}$.

Upon decoding the meta data from the digitally watermarked signal $S_{labeled}$, the signal $S_{embed}$ is extracted after performing a step of low pass filtering of the signal $S_{labeled}$. Since c and G are known, a decoding function is applied to $S_{embed}$ in order to extract the original meta data. The applied decoding function is defined as

$$D = g(S_{embed}) = \frac{(S_{embed}/G) + c - 1}{2c}.$$

Since the user's movements instead of being steady state may slowly modulate the G vector, the retrieved meta data may suffer from noise. In case the meta data to embed is stationary (such as an owner ID that is invariant for the whole length of the acceleration data trace), the data may be repetitively embedded at a preset frequency (corresponding to a certain time duration of the data depending on the sampling frequency), i.e., the meta data embedding is repeated periodically over the whole data trace. During meta data decoding, first multiple periods of the meta data information bearing LF portion are aggregated, to obtain an increased signal-to-noise ratio, and then the demodulation or decoding is implemented. The number of periods for aggregation may depend on the noise level of the modulated signal.

As another approach, an appropriate channel modulation prior to the embedding step may be employed. Further, a channel demodulation and a corresponding synchronization scheme may be employed to make the transmission of the meta data more robust. Such channel coding schemes are well known and therefore not described in further detail here. This channel coding may be applied for stationary data, though this method is typically more complex than the aforementioned embodiments. A channel coding method may be of benefit for dynamic and time-variant meta data, e.g. when the original time is embedded during acceleration data acquisition.

In cases when the meta data needs to be kept secret, the exact method of embedding/decoding and/or the used channel coding method, which may also involve cryptography, may be kept secret.

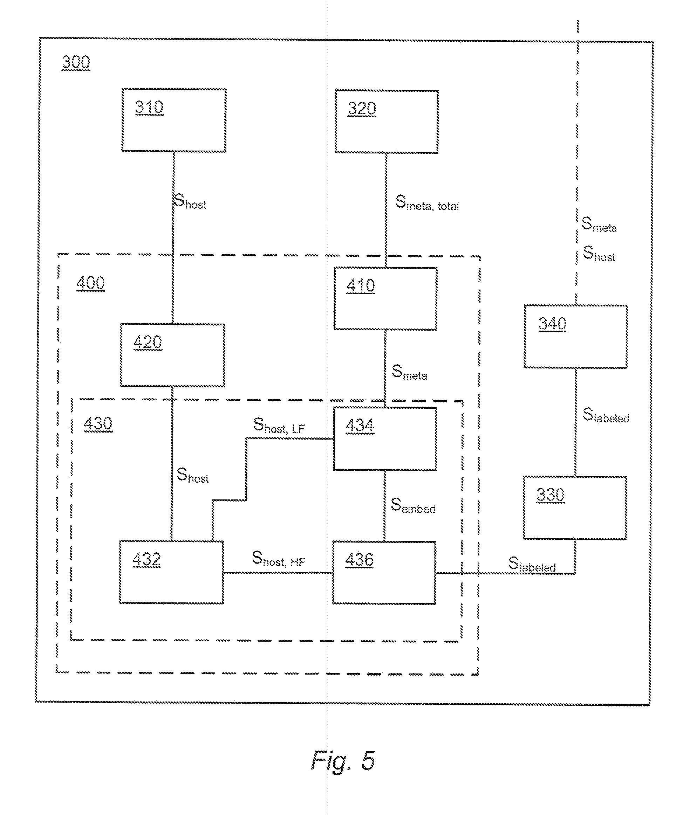

In an embodiment, according to Fig. 5, a device 300 is provided. The device 300 may be an accelerometer device, or any other consumer device configured to determine accelerometer data. The device 300 comprises an accelerometer sensor 310 for sensing the current acceleration and consequently, sampling acceleration data to form a signal $S_{host}$. The sensor 310 is connected to a module 400 for modifying the signal $S_{host}$. Referring to the module 400, a unit 410 for determining the meta data is connected to a first memory 320 storing meta data. Meta data includes e.g. the current date and time, the owner's ID, the serial number of the accelerometer sensor 310 etc. The proper meta data used for embedding is determined from a complete meta data representation $S_{meta, total}$. The proper meta data, originally stored in the memory 320 as digital bits of zeros and ones, thus forming a part of the complete meta data $S_{meta, total}$, is determined as a signal $S_{meta}$. The module 400 further has an accessing unit 420 connected to the sensor 310, configured to fetch the signal $S_{host}$ of acceleration data samples.

In an embodiment, a modifier 430 may further comprise a divider 432 configured to divide the host signal $S_{host}$ to a high frequency portion $S_{host, HF}$ and a low frequency portion $S_{host, LF}$, an embedding unit 434 configured to embed the meta data $S_{meta}$ into the low frequency portion $S_{host, LF}$, and an adding unit 436 configured to add the embedded low frequency portion $S_{embed}$ to the high frequency portion $S_{host, HF}$.

The divider 432 splits $S_{host}$ into a high frequency portion $S_{host, HF}$ and a low frequency portion $S_{host, LF}$. The embedding unit 434 is configured to embed $S_{meta}$ and $S_{host, LF}$ into a resulting signal $S_{embed}$. $S_{embed}$ and the high frequency portion $S_{host, HF}$ are processed in an adding unit 436, where the two signals are incorporated into a modified signal $S_{labeled}$. The signal $S_{labeled}$ is stored in a second memory 330. In one embodiment, the divider 432, the embedding unit 434 and the adding unit 436 are parts of a modifier 430. In a further embodiment, the divider 432 is excluded from the modifier 430. Moreover, the first memory 320 and the second memory 330 may be comprised in a single memory circuit.

In an embodiment, the module 400 may further comprise a coding unit configured to apply a channel coding scheme to the meta data signal $S_{meta}$.

In another embodiment, the modifier 430 may further comprise a modulator configured to amplitude modulate the host signal $S_{host}$.

In yet another embodiment, the module 400 may further comprise a first encrypting unit configured to encrypt the host signal $S_{host}$, and a second encrypting unit configured to encrypt the meta data.

In a further embodiment, the first encrypting unit and the second encrypting unit may be arranged in a common encrypting means.

In yet another embodiment, meta data may comprise at least one of the following: owner ID, accelerometer ID, date, time or location, ID of the sensor device used, external signaling by the user of the present activity, sensor wearing position, sensor wearing orientation relative to the earth, or geographic location of the activity sensor device.

In an embodiment, the second memory 330 may be accessed from an external device, such as a PC or a server, to retrieve the digitally watermarked signal $S_{labeled}$. The device 300 may also comprise a decoding unit 340, for decoding the digitally watermarked signal $S_{labeled}$ and extract the meta data. An external device (not shown) may also be connected, remotely or by wire, to the decoding unit 340 for retrieving the decoded meta data and accelerometer data samples.

Applications and use of the above-described embodiments are various and include exemplary fields such as security applications, public health applications, exercise applications, etc.

In an embodiment the device comprises hardware units for performing the method steps according to some embodiments.

In an embodiment, a computer program product is provided. The computer program is stored on a computer-readable medium comprising software code adapted to perform the steps of the method according some embodiments when executed on a data-processing apparatus.

The module 400, the unit 410 for determining the meta data, accessing unit 420, modifier 430, modulator, divider 432, embedding unit 434, adding unit 436, second module 340, first encrypting unit, second encrypting unit, or sensing unit 310 may comprise any unit normally used for performing the involved tasks, e.g. a hardware, such as a processor with a memory.

The invention may be implemented in any suitable form including hardware, software, firmware or any combination of these. However, preferably, the invention is implemented as computer software running on one or more data processors and/or digital signal processors. The elements and components of an embodiment of the invention may be physically, functionally and logically implemented in any suitable way. Indeed, the functionality may be implemented in a single unit, in a plurality of units or as part of other functional units. As such, the invention may be implemented in a single unit, or may be physically and functionally distributed between different units and processors.

It will be appreciated that the embodiments described in the foregoing may be combined without departing from the scope as defined by the appended patent claims.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

Although the description mainly refers to labeling a set of accelerometer data samples with meta data, other set of data samples, such as gyroscope data samples, magnetometer data samples, or pressure sensor data samples may be labeled without departing from the scope as defined by the appended patent claims. Accordingly, any suitable sensor may be used for collecting data, and any suitable data may be used for labeling in accordance with the method, module, and device according to some embodiments.

In the claims, the term "comprises/comprising" does not exclude the presence of other elements or steps. Furthermore, although individually listed, a plurality of means, elements or method steps may be implemented by e.g. a single unit or processor. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

**Claims**

1. A method for labeling a set of data samples, comprising:

   determining meta data ($S_{meta}$);
   accessing a host signal ($S_{host}$) comprising a set of sensor data samples; and
   modifying said host signal ($S_{host}$) by embedding said meta data ($S_{meta}$) into said host signal ($S_{host}$).

2. The method according to claim 1, wherein the set of sensor data samples comprises at least one of the following: accelerometer data samples, gyroscope data samples, magnetometer data samples, or pressure sensor data samples.

3. The method according to claim 1, wherein the step of modifying the host signal ($S_{host}$) comprises:

   dividing the host signal ($S_{host}$) to a high frequency portion ($S_{host, HF}$) and a low frequency portion ($S_{host, LF}$),
   embedding said meta data ($S_{meta}$) into said low frequency portion ($S_{host, LF}$), and
   adding said embedded low frequency portion ($S_{embed}$) to the high frequency portion ($S_{host, HF}$).

4. The method according to claim 1, further comprising applying a channel coding scheme to said meta data signal ($S_{meta}$).

5. The method according to claim 1, wherein the steps of determining meta data ($S_{meta}$), accessing a host signal ($S_{host}$) and modifying said host signal are repeated for a plurality of set of sensor samples.

6. The method according to claim 1, wherein the step of modifying said host signal ($S_{host}$) comprises amplitude modulation of said host signal.

7. The method according to claim 1, further comprising encrypting said host signal ($S_{host}$).

8. The method according to claim 1, further comprising encrypting said meta data ($S_{meta}$).

9. The method according to claim 1, wherein meta data comprises at least one of the following: owner ID, sensor ID, date, time or location, ID of the sensor device used, external signaling by the user of the present activity, sensor wearing position, sensor wearing orientation relative to the earth, or geographic location of the activity sensor device.

10. A module for labeling a set of data samples, comprising
    a unit (410) configured to determine meta data,
    an accessing unit (420) configured to access a host signal comprising a set of sensor data samples, and
    a modifier (430) configured to modify said host signal by embedding said meta data into said host signal.

11. A computer program product stored on a computer-readable medium comprising software code adapted to perform the steps of the method according to claim 1 when executed on a data-processing apparatus.

12. A device for collecting and labeling a set of data samples, comprising

a sensing unit (310) configured to generate a host signal corresponding to a physical quantity of the system, said signal comprising a set of data samples,
a first memory (320) storing at least meta data,
the module (400) according to claim 10,
a second memory (330) storing the modified host signal, and
a second module (340) configured to decode said modified host signal to the original host signal and the meta data.

100

| 110, $S_{meta}$ | 120, $S_{host}$ |

130, $S_{meta} + S_{host} \rightarrow S_{labeled}$

*Fig. 1*

101

110.
$S_{meta}$

120,
$S_{host}$

122,
$S_{meta}->S'_{meta}$
$S_{host}->S'_{host}$

124,
$S'_{meta}->S''_{meta}$

130

132,
$S'_{host}-> S'_{host, LF}, S'_{host, HF}$

134,
$S''_{meta} + S'_{host, LF}-> S_{embed}$

136,
$S_{embed} + S'_{host, HF}->$
$S_{labeled}$

*Fig. 2*

Spectral magnitude
of the acceleration

LF      HF     Frequency

*Fig. 3*

200

210,
$S_{labeled} -> S_{embed} + S_{host, HF}$

220,
$S_{embed} -> S_{meta} + S_{host, LF}$

230,
$S_{host, HF} + S_{host, LF} -> S_{host}$

*Fig. 4*

*Fig. 5*

Europäisches
Patentamt

European
Patent Office

Office européen
des brevets

## EUROPEAN SEARCH REPORT

Application Number

EP 08 16 9334

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/060550 A (INTERDIGITAL TECH CORP [US]; KUMOLUYI AKINLOLU OLORUNTOSI [US]) 8 June 2006 (2006-06-08) * paragraph [0011] - paragraph [0016] * * paragraph [0026] - paragraph [0031] * * paragraph [0036] - paragraph [0038] * | 1,2,4-6, 9-12 | INV. H04L29/08 |
| Y | * paragraph [0041] * ----- | 3,7,8 | |
| Y | US 6 674 873 B1 (DONESCU IOANA [FR] ET AL) 6 January 2004 (2004-01-06) * column 2, line 38 - line 54 * * column 6, line 44 - line 52 * ----- | 3 | |
| Y | WO 01/52178 A (DIGIMARC CORP [US]; DAVIS BRUCE L [US]; RHOADS GEOFFREY B [US]; CONWEL) 19 July 2001 (2001-07-19) * page 16, line 19 - line 30 * * page 31, line 1 - page 32, line 12 * ----- | 7,8 | |

TECHNICAL FIELDS
SEARCHED      (IPC)

H04L

The present search report has been drawn up for all claims

| Place of search | Date of completion of the search | Examiner |
|---|---|---|
| Munich | 29 April 2009 | Cankaya, Sukru |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 16 9334

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2009

| Patent document cited in search report | | Publication date | Patent family member(s) | | Publication date |
|---|---|---|---|---|---|
| WO 2006060550 | A | 08-06-2006 | US | 2007242852 A1 | 18-10-2007 |
| US 6674873 | B1 | 06-01-2004 | FR | 2785426 A1 | 05-05-2000 |
| | | | JP | 3796386 B2 | 12-07-2006 |
| | | | JP | 2000138819 A | 16-05-2000 |
| WO 0152178 | A | 19-07-2001 | AU | 2940201 A | 24-07-2001 |
| | | | EP | 1249002 A1 | 16-10-2002 |
| | | | JP | 2003520008 T | 24-06-2003 |
| | | | US | 2002001395 A1 | 03-01-2002 |

EPO FORM P0459

For more details about this annex : see Official Journal of the European Patent Office, No. 12/82